# EUROPEAN PATENT APPLICATION

(11) **EP 2 434 687 A1**
(43) Date of publication of application: **28.03.2012**
(21) Application number: 09847701.1
(22) Date of filing: 29.07.2009
(51) Int. Cl.: H04L 12/24, H04L 12/40, H04L 12/42

(54) **DATA COMMUNICATION METHOD, COMMUNICATION EQUIPMENT AND COMMUNICATION SYSTEM**

(71) Applicant: Huawei Technologies Co., Ltd., Longgang District, Shenzhen Guangdong 518129 (CN)
(72) Inventor: FANG, Qingyin, Guangdong 518129 (CN)
(74) Representative: Körber, Martin Hans
(86) International application number: PCT/CN2009/072970
(87) International publication number: WO 2011/011915

(57) **Abstract**

A data communication method, a communication device, and a communication system are disclosed. The method includes: a master device is connected, through the first RS485/RS422 port and the second RS485/RS422 port of the master device, to the at least two slave devices by using an RS485/RS422 bus loop, and when transmitting the data from the first RS485/RS422 port of the master device to the slave device connected to the master device through the first RS485/RS422 port of the master device, the master device activates the data transmission function on the first RS485/RS422 port of the master device while inactivates the data transmission function on the second RS485/RS422 port of the master device; and when a line interruption is detected, inactivating the data transmission function on the first RS485/RS422 port of the master device, and activating the data transmission function on the second RS485/RS422 port of the master device.

## Description

### FIELD OF THE INVENTION

The present invention relates to the field of communications technologies, and in particular, to a data communication method, a communication device, and a communication system.

### BACKGROUND OF THE INVENTION

In data communication, a bus is usually used to connect each device in a communication system. The bus, such as, an RS422 bus or an RS485 bus, used in the communication system belongs to a serial data bus. An RS422 bus supports 10 node devices, and an RS485 bus supports 32 node devices. Multiple node devices form a network. A network topology usually formed by using the RS422 bus or the RS485 bus has a bus architecture through which one of the multiple node devices servers as a master device and others server as slave devices, in implementation of point to multipoint communication.

In the prior art, a bus network is ordinarily formed by using an RS422 bus or an RS485 bus in the following mode: leading an RS485 bus, used as an example, from an interface of a master device to connect to a slave device, and the slave device is connected to other slave devices in turn by using an RS485 bus. Each slave node device provides two cable connectors. One is used to connect the bus of a previous device, and the other is used to connect the bus of a next device. In this manner, when the location of a slave device is changed or a new slave device is added, only the connection between two slave devices needs to be changed, which does not impact the connections of other slave devices, and brings convenience for on-site cable deployment and cable making. In addition, corresponding address dial switches are arranged on each slave device. During engineering, the state of the address dial switches may be set manually to assign different addresses for the slave devices. The master device accesses and interacts with the slave devices according to the addresses of the slave devices.

During research and practice of the prior art, the inventor finds that the prior art has the following drawback: in the related art, the bus network connection mode is used, and consequently, when the bus connection between one slave device and a next slave device fails, the next slave device and all the subsequent slave devices may not be accessed normally. Therefore, the connection mode used in the related art is low in reliability.

### SUMMARY OF THE INVENTION

Embodiments of the present invention provide a highly reliable data communication method, communication device, and communication system.

In order to solve the above technical problem, embodiments of the present invention provide technical solutions as follows:

A data communication method includes:
transmitting data, by a master device, to one of at least two slave devices, wherein the master device includes a first RS485/RS422 port and a second RS485/RS422 port, and the master device is connected, through the first RS485/RS422 port and the second RS485/RS422 port of the master device, to the at least two slave devices by using an RS485/RS422 bus loop, and when transmitting the data through the first RS485/RS422 port of the master device to the slave device connected to the master device through the first RS485/RS422 port of the master device, activates a data transmission function on the first RS485/RS422 port of the master device while inactivates a data transmission function on the second RS485/RS422 port of the master device ;and
when a line interruption is detected, inactivating the data transmission function on the first RS485/RS422 port of the master device, and activating the data transmission function on the second RS485/RS422 port of the master device.

A communication device includes:
a transceiving unit, configured to transmit data to one of at least two slave devices, wherein the communication device is connected, through a first RS485/RS422 port and a second RS485/RS422 port of the transceiving unit, to at least two slave devices by using an RS485/RS422 bus loop, and when transmitting the data from the first RS485/RS422 port of the transceiving unit to the slave device connected to the transceiving unit through the first RS485/RS422 port of the transceiving unit, the transceiving unit activates the data transmission function on the first RS485/RS422 port of the transceiving unit while inactivates the data transmission function on the second RS485/RS422 port of the transceiving unit; and
a control unit, configured to, when a line interruption is detected, inactivate the data transmission function on the first RS485/RS422 port of the transceiving unit, and activate the data transmission function of the transceiving unit.

A communication system includes:
a master device and at least two slave devices, the master device including a first RS485/RS422 port and a second RS485/RS422 port; wherein
the master device is configured to transmit data to one of at least two slave devices, where the master device is connected, through the first RS485/RS422 port and the second RS485/RS422 port of the master device, to the at least two slave devices by using an RS485/RS422 bus loop, and when transmitting the data from the first RS485/RS422 port of the master device to the slave device connected to the master device through the first RS485/RS422 port of the master device, the master device activates the data transmission function on the first RS485/RS422 port of the master device while inactivates the data transmission function on the second RS485/RS422 port of the master device; and
when a line interruption is detected, the master device inactivates the data transmission function on the first RS485/RS422 port of the transceiving unit, and activates the data transmission function on the second RS485/RS422 port of the transceiving unit.

A base station includes:
a control board, configured to transmit data to one of at least two slave devices, where the control board is connected, through a first RS485/RS422 port and a second RS485/RS422 port of the control board, to at least two slave devices by using an RS485/RS422 bus loop, and when transmitting the data from the first RS485/RS422 port of the control board to the slave device connected to the control board through the first RS485/RS422 port of the control board, the control board enables the data transmission function on the first RS485/RS422 port of the control board while inactivates the data transmission function on the second RS485/RS422 port of the control board; and
when a line interruption is detected, the control board inactivates the data transmission function on the first RS485/RS422 port of the control board, and activates the data transmission function on the second RS485/RS422 port of the control board.

The technical solution according to the embodiments of the present invention set forth is as follows: The master device transmits data to one of at least two slave devices, wherein, the master device is connected, through the first RS485/RS422 port and the second RS485/RS422 port, to the at least two slave devices by using an RS485/RS422 bus loop. When transmitting the data from the first RS485/RS422 port of the master device to the slave device connected to the master device through the first RS485/RS422 port of the master device, the master device activates the data transmission function on the first RS485/RS422 port of the master device while inactivates the data transmission function on the second RS485/RS422 port of the master device; and when a line interruption is detected, the master device, according to a ring network structure, inactivates the data transmission function on the first RS485/RS422 port of the master device, and activates the data transmission function on the second RS485/RS422 port of the master device. In this manner, even though a line is interrupted, all slave devices may be accessed normally. The defect caused by using a bus network to implement a connection in the prior art is overcome, and the reliability of the connection is improved.

### BRIEF DESCRIPTION OF THE DRAWINGS

For a clearer description of the technical solutions of the present invention or the prior art, the accompanying drawings for illustrating the embodiments of the present invention or the prior art are briefly introduced below. Apparently, the drawings are for an exemplary purpose, and persons skilled in the art may derive other drawings from the drawings without creative efforts.

FIG. 1 is a flowchart of a data communication method according to an embodiment of the present invention;

FIG. 2 is a schematic diagram of a connection mode according to an embodiment of the present invention;

FIG. 3 is a schematic diagram of processing after a line interruption is detected according to an embodiment of the present invention;

FIG. 4 is a schematic structural diagram of an inner circuit of a master device according to an embodiment of the present invention;

FIG. 5 is a schematic structural diagram of a communication device according to an embodiment of the present invention; and

FIG. 6 is a schematic structural diagram of a communication system according to an embodiment of the present invention.

### DETAILED DESCRIPTION OF THE EMBODIMENTS

The technical solution of the present invention is described clearly and thoroughly below with reference to the accompanying drawings of the embodiments of the present invention. Obviously, the embodiments to be described are a part but not all of the embodiments. Persons skilled in the related art may derive other embodiments from the embodiments given here without making creative efforts, and all such embodiments fall within the protection scope of the present invention.

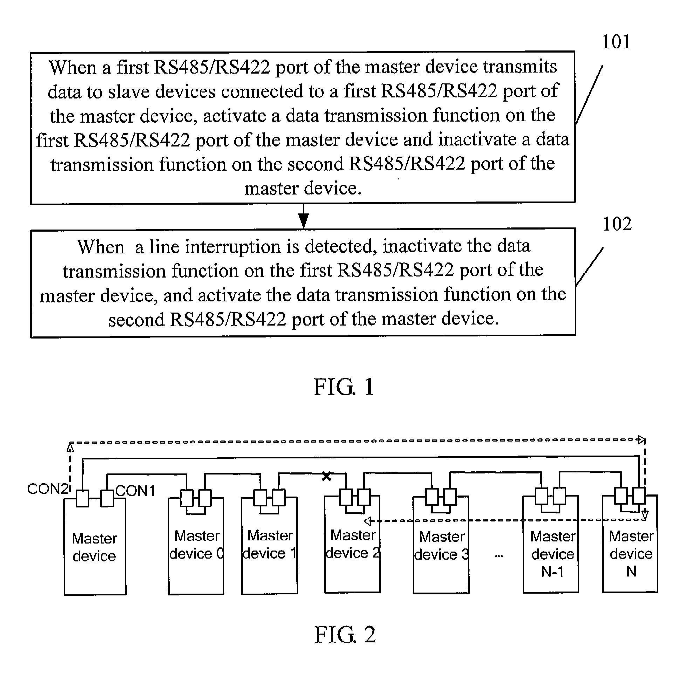

FIG. 1 is a flowchart of a data communication method according to an embodiment of the present invention.

Step 101: A master device transmits data to one of at least two slave devices, where the master device includes a first RS485/RS422 port and a second RS485/RS422 port, and the master device is connected, through the first RS485/RS422 port and the second RS485/RS422 port of the master device, to the at least two slave devices by using an RS485/RS422 bus loop; and when transmitting the data from the first RS485/RS422 port of the master device to the slave device connected to the master device through the first RS485/RS422 port of the master device, the master device activates a data transmission function on the first RS485/RS422 port of the master device while inactivates a data transmission function on the second RS485/RS422 port of the master device.

According to an embodiment of the present invention, when the first RS485/RS422 port, the second RS485/RS422 port, and an RS485/RS422 bus are applicable, the first RS485 port, the second RS485 port, and the RS485 bus are homologous; the first RS422 port, the second RS422 port, and the RS422 bus are homologous. Specifically, when the first RS485 port is selected, the second RS485 port and the RS485 bus are correspondingly selected; and when the first RS422 port is selected, the second RS422 port and the RS422 bus are correspondingly selected. The process that the master device is connected, from the first RS485/RS422 port and the second RS485/RS422 port of the master device, to the at least two slave devices by using an bus loop includes:
connecting the first RS485/RS422 port of the master device to the first RS485/RS422 port of a first slave device of the at least two slave devices by using an RS485/RS422 bus, connecting the second RS485/RS422 port of the first slave device to the first RS485/RS422 port of a second slave device of the at least two slave devices by using the RS485/RS422 bus, connecting the at least two slave devices by using the RS485/RS422 bus, and connecting a last device of the at least two slave devices to the second RS485/RS422 port of the master device by using the RS4851RS422 bus.

Step 102: When a line interruption is detected, inactivate the data transmission function on the first RS485/RS422 port of the master device and active the data transmission function on the second RS485/RS422 port of the master device.

The detecting a line interruption includes: when it is detected that the first RS485/RS422 port of the master device does not receive data from the slave device connected to the first RS485/RS422 port of the master device, determining that a line interruption occurs and determining the location of the line interruption.

The determining the location of the line interruption includes:
when it is detected that the first RS485/RS422 port of the master device does not receive data from the slave device connected to the master device, determining that the line interruption is between the slave device and a slave device previously connected to the slave device; and
the inactivating the data transmission function on the first RS485/RS422 port of the master device and activating the data transmission function on the second RS485/RS422 port of the master device include:
   transmitting data to a slave device following a determined location of the line interruption from the second RS485/RS422 port of the master device, and transmitting, based on a time division principle, data in turn to a slave device before the determined location of the line interruption from the first RS485/RS422 port of the master device.

It may be seen from this embodiment that the technical solution according to embodiments of the present invention is as follows: The master device transmits data to one of at least two slave devices, where the master device is connected, through the first RS485/RS422 port and the second RS485/RS422 port, to the at least two slave devices by using an bus loop and transmits the data from the first RS485/RS422 port to the slave device connected to the first RS485/RS422 port, and when a line interruption is detected, the master device, according to the ring network structure, inactivates the data transmission function on the first RS485/RS422 port of the master device, and activates the data transmission function on the second RS485/RS422 port of the master device. In this manner, even though the line is interrupted, all slave devices may be accessed normally. The defect caused by using the bus network to implement the connection in the prior art is overcome, and the reliability of the connection is improved. The following section describes the technical solution according to embodiments of the present invention in detail.

FIG. 2 is a schematic diagram of a connection mode according to an embodiment of the present invention.

As shown in FIG 2, a master device is provided with two RS485/RS422 ports: CON1 and CON2. CON1 and CON2 may be two independent physical ports or may be one independent physical port which implements two logical RS485/RS422 ports by using two connector interfaces, for example, RJ45 connector. Each slave device provides an RS/485/RS422 input port and an RS485/RS422 output port. The CON1 and CON2 ports of the master device are sequentially connected to the first RS485/RS422 port and the second RS485/RS422 port of each slave device. Specifically, the CON1 port of the master device is connected to the first RS485/RS422 port of the first slave device; the second RS485/RS422 port of the first slave device is connected to the first RS485/RS422 port of the second slave device, and so on. The second RS485/RS422 port of a last slave device is connected to the CON2 port of the master device to form a logical ring network.

The master device controls the CON1 port or the CON2 port to perform exclusively access. Specifically, when the master device accesses the slave devices (transmitting data) by using the CON1 port, the master device may not access the slave devices (the CON2 port is forbidden to transmit data) by using the CON2 port; when the master device accesses the slave devices by using the CON2 port, the master device may not access the slave devices by using the CON1 port. Generally, the master device may be set to access all slave devices by using the CON1 port by default.

In a normal situation, the master device implements the communication and control for the slave devices on a bus by using the CON1 port, and meanwhile the transmission function on the CON2 port is inactivated.

When a bus connection between the slave devices is interrupted, the master device accesses a slave device following the determined location of the line interruption by using the CON2 port.

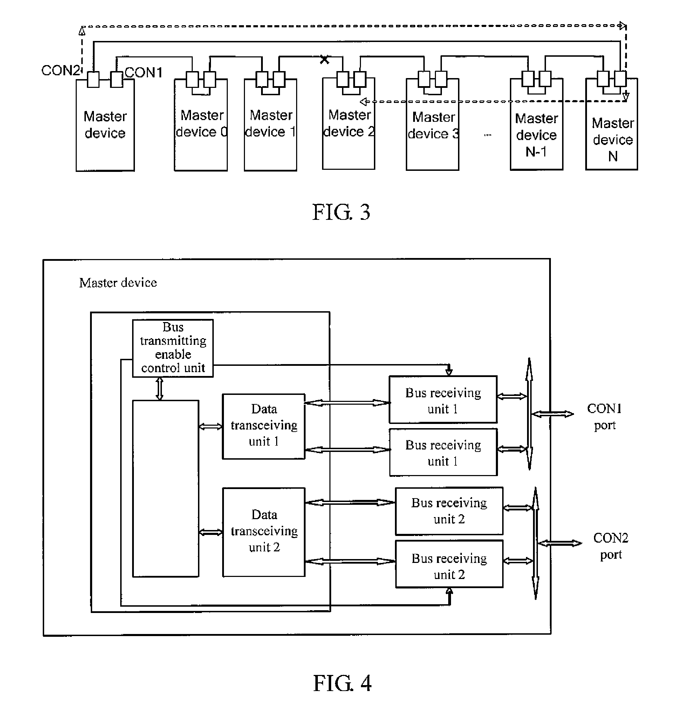

FIG. 3 is a schematic diagram of processing after a line interruption is detected according to an embodiment of the present invention.

As shown in FIG. 3, the line between a slave device 1 and a slave device 2 is interrupted. The master device may access only a slave device 0 and the slave device 1 by using the CON1 port. Slave devices 2-N on the line following the location of the line interruption may not be accessed. In this case, the master device may disable the CON1 port, and access the slave devices on the line following the location of the line interruption by using the CON2 port. In the case of a failure, the master device, based on the time division principle, activates in turn the CON1 and CON2 ports so that the slave devices may be accessed normally. As a result, the defect in the prior art that the slave devices may not be accessed due to an interruption on the bus is overcome.

The master device may determine, according to the status of data receiving on the CON1 port, whether the line is interrupted. The data transmitted by the master device through the CON1 port may be received through the CON1 port. If the data transmitted from the CON1 port, it may be determined that the line is interrupted.

Further, the master device needs to determine the location of the line interruption, that is, to determine following which device the line is interrupted. The master device may determine a specific location of the line interruption according to a detected address of a slave device.

The following section describes the internal structures of the master device and the slave device.

FIG. 4 is a schematic structural diagram of the inner circuit of a master device according to an embodiment of the present invention.

As shown in FIG.4, the master device includes: a bus transmitting unit 1, a bus receiving unit 1, a bus transmitting unit 2, a bus receiving unit 2, a data transceiving unit 1, a data transceving unit 2, a control unit, and a bus transmitting enable control unit.

The bus transmitting unit 1 and the bus receiving unit 1 are connected to a CON1 port of the master device; and the bus transmitting unit 2 and the bus receiving unit 2 are connect to a CON2 port of the master device.

The data transceiving unit 1 is connected to the bus transmitting unit 1 and the bus receiving unit 1 separately to implement the receiving and transmitting of the data on the CON1 port; the data transceiving unit 2 is connected to the bus transmitting unit 2 and the bus receiving unit 2 separately to implement the receiving and transmitting of the data on the CON1 port. The data transceiving unit 1 and the data transceving unit 2 transmit received data to the control unit or transmit the data sent by the control unit.

The control unit activates or inactivates the transmitting function of the bus transmitting unit 1 and the bus transmitting unit 2 by using the bus transmitting enable control unit. By default, the control unit activates the bus transmitting unit 1 by using an "enable control 1" signal output by the bus transmitting enable control unit so that the control unit may transmit data through the CON1 port. Meanwhile, the control unit inactivates the bus transmitting unit 2 by using an "enable control 2" signal output by the bus transmitting enable control unit so that a conflict on the bus caused by simultaneously outputting data on the CON1 and CON2 ports is prevented. As a result, the master device may normally access all slave devices by using the CON1 port.

When determining that slave devices of some addresses may not be normally accessed, the control unit controls the transmitting enable control unit to output the "enable control 1" signal to inactivate the bus transmitting unit 1, and controls the transmitting enable control unit to output the "enable control 2" signal to activate the bus transmitting unit 2. In this manner, the master device may access, through a loop bus, the slave device following the location of the line interruption by using the CON2 port. The control unit of the master device, based on the time division principle, activate the bus transmitting units 1 and 2 in turn so that all slave devices may be accessed normally.

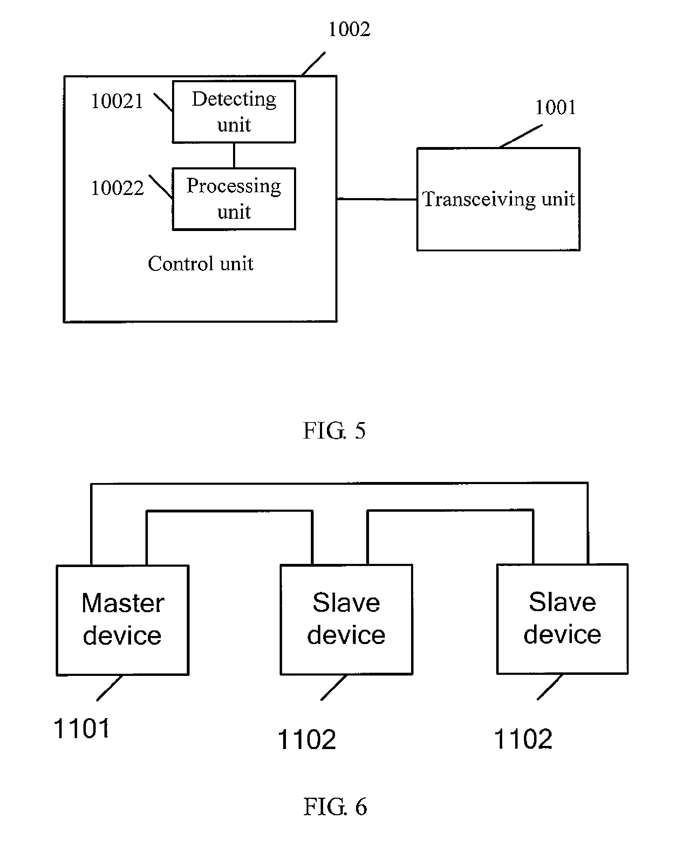

FIG. 5 is a schematic structural diagram of a communication device according to an embodiment of the present invention.

As shown in FIG. 5, the communication device includes a tranceiving unit 1001 and a control unit 1002.

The transceiving unit 1001 is configured to transmit data to one of at least two slave devices, the communication device is connected, from a first RS485/RS422 port and a second RS485/RS422 port of the transceiving unit 1001, to at least two slave devices by using an RS485/RS422 bus loop. According to an embodiment of the present invention, when the first RS485/RS422 port, the second RS485/RS422 port, and an RS485/RS422 bus are applicable, the first RS485 port, the second RS485 port and the RS485 bus are homologous; the first RS422 port, the second RS422 port, and the RS422 bus are homologous. Specifically, when the first RS485 port is selected, the second RS485 port and the RS485 bus are correspondingly selected; and when the first RS422 port is selected, the second RS422 port and the RS422 bus are correspondingly selected. When the first RS485/RS422 port of the transceiving unit 1001 transmits data to slave devices connected to the first RS485/RS422 port of the transceiving unit 1001, the data transmission function on the first RS485/RS422 port of the transceiving unit 1001 is activated and the data transmission function on the second RS485/RS422 port of the transceiving unit 1001 is inactivated.

The control unit 1002 is configured to, when a line interruption is detected, inactivate the data transmission function on the first RS485/RS422 port of the transceiving unit 1001, and activate the data transmission function on the second RS485/RS422 port of the transceiving unit 1001.

The control unit 1002 includes: a detecting unit 1021, and a processing unit 10022.

The detecting unit 10021 is configured to, when it is detected that the first RS485/RS422 port of the transceiving unit 1001 does not receive data from the slave device connected to first RS485/RS422 port of the transceiving unit 1001, determine that a line interruption occurs and determine the location of the line interruption.

The processing unit 10022 is configured to inactivate the data transmission function on the first RS485/RS422 port of the transceiving unit 1001, while activate the data transmission function on the second RS485/RS422 port of the transceiving unit 1001.

The detecting unit 10021, when detecting that the first RS485/RS422 port of the transceiving unit 1001 does not receive data from the slave device, determines that the line interruption is between the slave device and a slave device previously connected to the slave device.

The processing unit 10022 controls data transmission from the second RS485/RS422 port of the transceiving unit 1001 to a slave device following the determined location of the line interruption, and in turn controls, based on the time division principle, data transmission from the first RS485/RS422 port the transceiving unit 1001 to a slave device before the determined location of the line interruption and data transmission from the second RS485/RS422 port of transceiving unit 1001 to the slave device following the determined location of the line interruption.

The detailed structure and description of the communication device may refer to the description in FIG.5, which are not detailed here. According to an embodiment of the present invention, the communication device may be a base station which includes a control board. The control board may include the transceiving unit 1001 and the control unit 1002. Specifically, the functions of the transceiving unit 1001 and the control unit 1002 may be implemented by the control board of the base station.

The control board is configured to transmit data to one of at least two slave devices, where the control board is connected, through a first RS485/RS422 port and a second RS485/RS422 port of the control board, to at least two slave devices by using an RS485/RS422 bus loop, and when transmitting the data from the first RS485/RS422 port of the control board to the slave device connected to the control board through the first RS485/RS422 port of the control board, the control board activates the data transmission function on the first RS485/RS422 port of the control board while inactivates the data transmission function on the second RS485/RS422 port of the control board.

When a line interruption is detected, the control board inactivates the data transmission function on the first RS485/RS422 port of the control board, and activates the data transmission function on the second RS485/RS422 port of the control board.

When it is detected that the first RS485/RS422 port of the master device does not receive data from the slave device connected to the master device, the control board determines that a line interruption occurs and determiners the location of the line interruption.

FIG. 6 is a schematic structural diagram of a communication system according to an embodiment of the present invention.

As shown in Fig.6, the communication system includes: a master device 1101, and at least two slave devices 1102.

The master device 1101 is configured to transmit data to one of at least two slave devices 1102, where the master device 1101 is connected, through the first RS485/RS422 port and the second RS485/RS422 port of the master device, to the at least two slave devices 1102 by using an RS485/RS422 bus loop, and when transmitting the data from the first RS485/RS422 port of the master device to the slave device connected to the master device through the first RS485/RS422 port of the master device, the master device activates the data transmission function on the first RS485/RS422 port of the master device while inactivates the data transmission function on the second RS485/RS422 port of the master device; when a line interruption is detected, the master device inactivates the data transmission function on the first RS485/RS422 port of the master device, and activates the data transmission function on the second RS485/RS422 port of the master device.

The at least two slave devices 1102 are connected to the master device 1101 by using the bus loop.

When it is detected that the first RS485/RS422 port of the master device does not receive data from the slave device 1102, the master device 1101 determines that a line interruption occurs and determines that the line interruption is between the slave device 1102 and a slave device 1102 previously connected to the slave device.

The master device 1101 controls data transmission from the second RS485/RS422 port of the master device to a slave device 1102 following the determined location of the line interruption, and in turn controls, based on the time division principle, data transmission from the first RS485/RS422 port of the master device to a slave device 1102 before the determined location of the line interruption and data transmission from the second RS485/RS422 port of the master device to the slave device 1102 following the determined location of the line interruption.

In conclusion, the technical solution according to an embodiment of the present invention is as follows: The master device transmits data to one of at least two slave devices, where the master device is connected, through the first RS485/RS422 port and the second RS485/RS422 port of the master device, to the at least two slave devices by using an RS485/RS422 bus loop, and when transmitting the data from the first RS485/RS422 port of the master device to the slave device connected to the master device through the first RS485/RS422 port of the master device, the master device activates the data transmission function on the first RS485/RS422 port of the master device while inactivates the data transmission function on the second RS485/RS422 port of the master device; and when a line interruption is detected, the master device, according to the ring network structure, inactivates the data transmission function on the first RS485/RS422 port of the master device, and activates the data transmission function on the second RS485/RS422 port of the master device. In this manner, even though the line is interrupted, all slave devices may be accessed normally. The defect caused by using the bus network to implement the connection in the prior art is overcome, and the reliability of the connection is improved.

It is understandable to those skilled in the art that all or part of the steps of the preceding methods may be implemented by hardware following instructions of programs. The programs may be stored in a computer readable storage medium. The storage medium may be a read only memory (ROM), random access memory (RAM), a magnetic disk or a compact disk read-only memory (CD-ROM).

The above is a detailed introduction to a data communication method, communication device, and communication system according to the embodiments of the present invention. It should be noted that the above exemplary embodiments are for an illustration purpose, and the invention is not limited to the embodiments. It is apparent that those skilled in the art may make various modifications and variations to the invention without departing from the spirit and protection scope of the invention. The invention is intended to cover the modifications and variations provided that they fall in the protection scope of defined by the following claims or their equivalents.

## Claims

1. A data communication method, comprising:
transmitting, by a master device, data to one of at least two slave devices, wherein the master device comprises a first RS485/RS422 port and a second RS485/RS422 port, and the master device is connected, through the first RS485/RS422 port and the second RS485/RS422 port of the master device, to the at least two slave devices by using an RS485/RS422 bus loop, and when transmitting the data from the first RS485/RS422 port of the master device to the slave device connected to the master device through the first RS485/RS422 port of the master device, the master device enables a data transmission function on the first RS485/RS422 port of the master device while inactivates a data transmission function on the second RS485/RS422 port of the master device; and
when a line interruption is detected, disabling the data transmission function on the first RS485/RS422 port of the master device, and enabling the data transmission function on the second RS485/RS422 port of the master device.

2. The data communication method according to claim 1, wherein the process that the master device is connected, through the first RS485/RS422 port and the second RS485/RS422 port, to the at least two slave devices by using an RS485/RS422 bus loop, comprises:
connecting the first RS485/RS422 port of the master device to the first RS485/RS422 port of a first slave device of the at least two slave devices by using the RS485/RS422 bus, connecting the second RS485/RS422 port of the first slave device to the first RS485/RS422 port of a second slave device of the at least two slave devices by using the RS485/RS422 bus, connecting the at least two slave devices in turn by using the RS485/RS422 bus, and connecting a last slave device of the at least two slave devices to the second RS485/RS422 port of the master device by using the RS485/RS422 bus.

3. The data communication method according to claim 1, wherein the detecting a line interruption comprises:
when it is detected that the first RS485/RS422 port of the master device does not receive data from the slave device connected to the master device, determining that a line interruption occurs and determining a location of the line interruption.

4. The data communication method according to claim 3, wherein the determining the location of the line interruption comprises:
when it is detected that the first RS485/RS422 port of the master device does not receive data from the slave device connected to the master device, determining that the line interruption is between the slave device and a slave device previously connected to the slave device;
the inactivating the data transmission function on the first RS485/RS422 port of the master device and activating the data transmission function on the second RS485/RS422 port of the master device comprise:
transmitting data from the second RS485/RS422 port of the master device to a slave device following a determined location of the line interruption, and in turn transmitting, based on a time division principle, data from the first RS485/RS422 port of the master device to a slave device before the determined location of the line interruption, and transmitting data from the second RS485/RS422 port of the master device to the slave device following the determined location of the line interruption.

5. A communication device, comprising:
a transceiving unit, configured to transmit data to one of at least two slave devices, wherein the communication device is connected, through a first RS485/RS422 port and a second RS485/RS422 port of the transceiving unit, to at least two slave devices by using an RS485/RS422 bus loop, and when transmitting the data from the first RS485/RS422 port of the transceiving unit to the slave device connected to the transceiving unit through the first RS485/RS422 port of the transceiving unit, the transceiving unit activates a data transmission function on the first RS485/RS422 port of the transceiving unit while inactivates a data transmission function on the second RS485/RS422 port of the transceiving unit; and
a control unit, configured to, when a line interruption is detected, inactivate the data transmission function on the first RS485/RS422 port of the transceiving unit, and activate the data transmission function on the second RS485/RS422 port of the transceiving unit.

6. The communication device according to claim 5, wherein
the control unit comprises:
a detecting unit, configured to, when it is detected that the first RS485/RS422 port of the master device does not receive data from the slave device connected to the master device, determine that a line interruption occurs and determine a location of the line interruption; and
a processing unit, configured to, when a line interruption is detected by the detecting unit, inactivate the data transmission function on the first RS485/RS422 of the transceiving unit, and activate the data transmission function on the second RS485/RS422 port of the transceiving unit.

7. The communication device according to claim 6, wherein
a process that the detecting unit determines the location of the line interruption comprises:
when detecting that the first RS485/RS422 port of the master device does not receive data from the slave device connected to the master device, determining that the line interruption is between the slave device and a slave device previously connected to the slave device; and
the processing unit controls data transmission from the second RS485/RS422 port of the transceiving unit to a slave device following a determined location of the line interruption, and in turn controls, based on a time division principle, data transmission from the first RS485/RS422 port the transceiving unit to a slave device before the determined location of the line interruption and data transmission from the second RS485/RS422 port of transceiving unit to the slave device following the determined location of the line interruption.

8. A communication system, comprising:
a master device and at least two slave devices, the master device comprising a first RS485/RS422 port and a second RS485/RS422 port; wherein
the master device is configured to transmit data to one of at least two slave devices, wherein the master device is connected, through the first RS485/RS422 port and the second RS485/RS422 port of the master device, to the at least two slave devices by using an RS485/RS422 bus loop, and when transmitting the data from the first RS485/RS422 port of the master device to the slave device connected to the master device through the first RS485/RS422 port of the master device, the master device activates a data transmission function on the first RS485/RS422 port of the master device while inactivates a data transmission function on the second RS485/RS422 port of the master device; and
when a line interruption is detected, the master device inactivates the data transmission function on the first RS485/RS422 port of the transceiving unit, and activates the data transmission function on the second RS485/RS422 port of the transceiving unit.

9. The communication system according to claim 8, wherein the process that the master device detects a line interruption comprises:
when detecting that the first RS485/RS422 port of the master device does not receive data from the slave device connected to the master device, determining that a line interruption occurs and determining a location of the line interruption.

10. The communication system according to claim 9, wherein the process that the master device determines the location of the line interruption comprises:
when detecting that the first RS485/RS422 port of the master device does not receive data from the slave device connected to the master device, determining that a line interruption occurs and determining that the line interruption is between the slave device and a slave device previously connected to the slave device; and
the master device controls data transmission from the second RS485/RS422 port of the master device to a slave device following a determined location of the line interruption, and in turn controls, based on a time division principle, data transmission from the first RS485/RS422 port of the master device to a slave device before the determined location of the line interruption, and data transmission from the second RS485/RS422 port of the master device to the slave device following the determined location of the line interruption.

11. A base station, comprising a control board; wherein:
the control board is configured to transmit data to one of at least two slave devices, wherein the control board is connected, through a first RS485/RS422 port and a second RS485/RS422 port of the control board, to at least two slave devices by using an RS485/RS422 bus loop, and when transmitting the data from the first RS485/RS422 port of the control board to the slave device connected to the control board through the first RS485/RS422 port of the control board, the control board activates a data transmission function on the first RS485/RS422 port of the control board while inactivates a data transmission function on the second RS485/RS422 port of the control board; and
when a line interruption is detected, the control board activates the data transmission function on the first RS485/RS422 port of the control board, and inactivates the data transmission function on the second RS485/RS422 port of the control board.

12. The base station according to claim 11, wherein
the process that the control board detects a line interruption comprises: when detecting that the first RS485/RS422 port of the control board does not receive data from the slave device connected to the master device, determining that a line interruption occurs and determining a location of the line interruption.
